# EUROPÄISCHE PATENTANMELDUNG

(11) **EP 3 375 761 A1**
(43) Veröffentlichungstag der Anmeldung: **19.09.2018**
(21) Anmeldenummer: 18162126.9
(22) Anmeldetag: 15.03.2018
(51) Int. Cl.: C02F 9/00, C02F 1/32, C02F 1/72, C02F 1/76, C02F 1/78, C02F 1/74, C02F 3/12, C02F 11/08, C02F 101/32, C02F 103/44, B60S 3/04

(54) **AUFBEREITUNGSANLAGE**

(30) Priorität: 17.03.2017 DE 102017105864
(71) Anmelder: Firma aquadetox international GmbH, 88317 Altmannshofen (DE)
(72) Erfinder: SCHAIBLE, Jürgen, 88299 Leutkirch im Allgäu (DE); LORCH, Roland, 88348 Bad Saulgau (DE)
(74) Vertreter: Pfister & Pfister Patent- und Rechtsanwälte

(57) **Zusammenfassung**

Die Erfindung betrifft eine Aufbereitungsanlage für Flüssigkeiten, insbesondere für Wasser, welche mindestens eine Aufbereitungsstufe und dieser in Fließrichtung des Fluids nachgeschaltet, eine Brauchwasservorlage und eine Entkeimstation aufweist. Die Erfindung betrifft ferner eine Fahrzeugreinigungsanlage umfassend die oben genannte Aufbereitungsanlage.

## Beschreibung

Die Erfindung betrifft eine Aufbereitungsanlage für Flüssigkeiten, insbesondere für Wasser, welche mindestens eine Aufbereitungsstufe aufweist.

Eingangs beschriebene Aufbereitungsanlagen sind im Stand der Technik hinlänglich bekannt. Sie werden zum Beispiel in Autowaschstraßen oder bei Autowaschselbstbedienungsplätzen eingesetzt, um das insbesondere mit Mineralöl verunreinigte Schmutzwasser aufzubereiten. Mit den eingesetzten Aufbereitungsanlagen soll zum einen der Frischwasserkonsum minimiert und auch verhindert werden, dass schädliche Abwasserbestandteile in die Kanalisation oder sonst in die Umwelt gelangen.

Allerdings wird beobachtet, dass sich das zu Brauchwasser aufbereitete, vormals verunreinigte Schmutzwasser mit für die Benutzer der Selbstbedienungsplätze oder dem Bedienpersonal der Autowaschstraßen schädlichen Keime anreichert.

Es ist daher Aufgabe der vorliegenden Erfindung einen Vorschlag zu unterbreiten, wie der Gesundheitsschutz der Personen, die mit solchem Brauchwasser in Kontakt kommen, verbessert werden kann.

Zur Lösung dieser Aufgabe geht die Erfindung aus von einer Aufbereitungsanlage wie eingangs beschrieben und schlägt vor, dass diese in Fließrichtung des Fluids, der Aufbereitungsstufe nachgeschaltet, eine Brauchwasservorlage und eine Entkeimstation aufweist und die Brauchwasservorlage in Fließrichtung des Fluids der Entkeimstation nachgeschaltet ist und das Fluid aus der Brauchwasservorlage an den Verbraucher geleitet wird, wobei die Aufbereitungsstufe in Fließrichtung des Fluids zunächst einen Schlammfang, dann eine biologische Belebungseinheit und insbesondere eine Nachklärstufe aufweist und die Entkeimstation als UV-Entkeimstation, katalytische Oxidationsstufe, katalytische Nassoxidationsstufe und/oder unter Einsatz von Desinfektionsmitteln, wie insbesondere Ozon, Wasserstoffperoxid oder Chlor wirkende Entkeimstation ausgebildet ist.

Als Fluid bzw. Flüssigkeit im Sinne dieser Anmeldung werden zum Beispiel verunreinigtes Schmutzwasser, insbesondere mit Mineralöl verunreinigtes Schmutzwasser sowie des Weiteren Schmutzwasser, das Verunreinigungen mit Kohlenwasserstoffverbindungen aufweist, angesehen.

Primärer Zweck, neben weiteren möglichen Funktionen der erfindungsgemäß vorgeschlagenen Entkeimstation ist, dass in dem aufbereiteten Brauchwasser die Konzentration von Keimen reduziert wird. Die Konzentration von Keimen wird dabei soweit reduziert, wie es durch aktuelle wissenschaftliche Untersuchungen oder Gesetze vorgegeben wird. Selbstverständlich kann die Konzentration von Keimen auch weiter als es die Vorgaben erfordern reduziert werden. Mit der beschriebenen Technologie ist eine absolute Keimfreiheit nicht zu erzielen, vielmehr wird durch die Entkeimstation keimarmes Fluid oder keimarmes Wasser angestrebt. Gerade aber das Zusammenwirken der vorgeschlagenen Entkeimstation mit einer Brauchwasservorlage führt zu überraschenden Vorteilen. Die Brauchwasservorlage ist ein Vorrat von aufbereiteten, also grundsätzlich gereinigtem Wasser, das für die weitere Benutzung zum Beispiel als Waschwasser vorgehalten wird. Er hat die Aufgabe eines Puffertanks. Gerade das Zusammenwirken der vorgeschlagenen Entkeimstation mit der Brauchwasservorlage führt zu einer sehr effizienten Behandlung des Wassers und damit verbunden auch mit einer erheblichen Verbesserung des Gesundheitsschutzes für die Personen, die mit dem Brauchwasser arbeiten. Es ist nämlich möglich, dass ein permanenter Entkeimungsprozess mithilfe der Entkeimstation durchgeführt wird und somit dauerhaft, auch bei einem kurzzeitig großen Anfall an Schmutzwasser, ein hoher Entkeimungsgrad des zur weiteren Verwendung vorgehaltenen Brauchwassers erreicht wird.

Es bestehen mehrere alternative Varianten für die Realisierung des erfindungsgemäßen Vorschlages. Zunächst ist vorgesehen, dass die Entkeimstation in Fließrichtung des Fluids der Brauchwasservorlage nachgeschaltet ist. Üblicherweise gelangt das Brauchwasser nach der Brauchwasservorlage zum Verbraucher. Durch diesen Vorschlag erfolgt eine Entkeimung kurz bevor das Brauchwasser wieder in Kontakt mit dem Benutzer kommen kann. Diese frische Entkeimung wirkt einer ansonsten stattfindenden Aufkeimung des in der Brauchwasservorlage stehenden Brauchwassers in günstiger Weise entgegen.

Des Weiteren ist alternativ vorgesehen, dass die Brauchswasservorlage in Fließrichtung des Fluids der Entkeimstation nachgeschaltet ist. Durch diese Variante gelangt immer möglichst entkeimtes Wasser in die Brauchwasservorlage.

Natürlich können die beiden vorgenannten Varianten miteinander in günstiger Weise kombiniert werden.

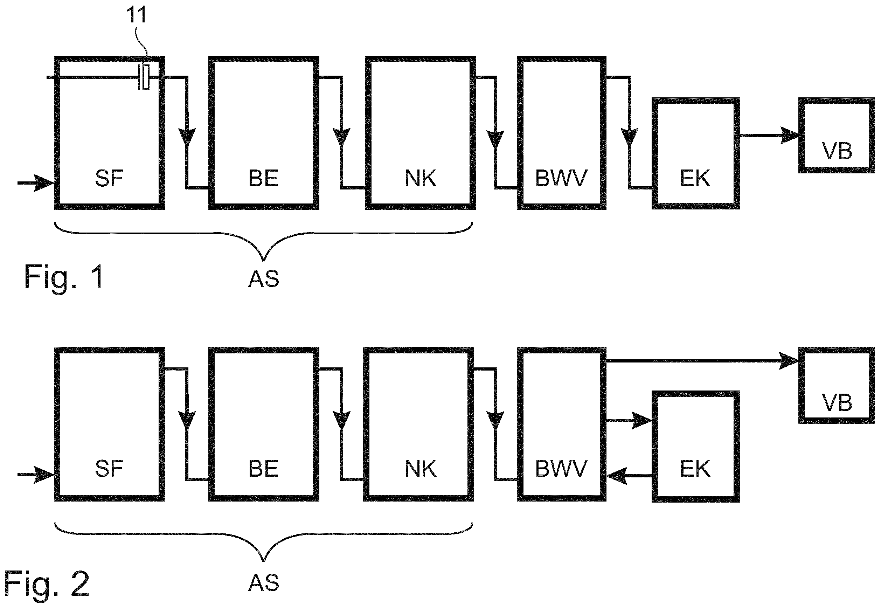

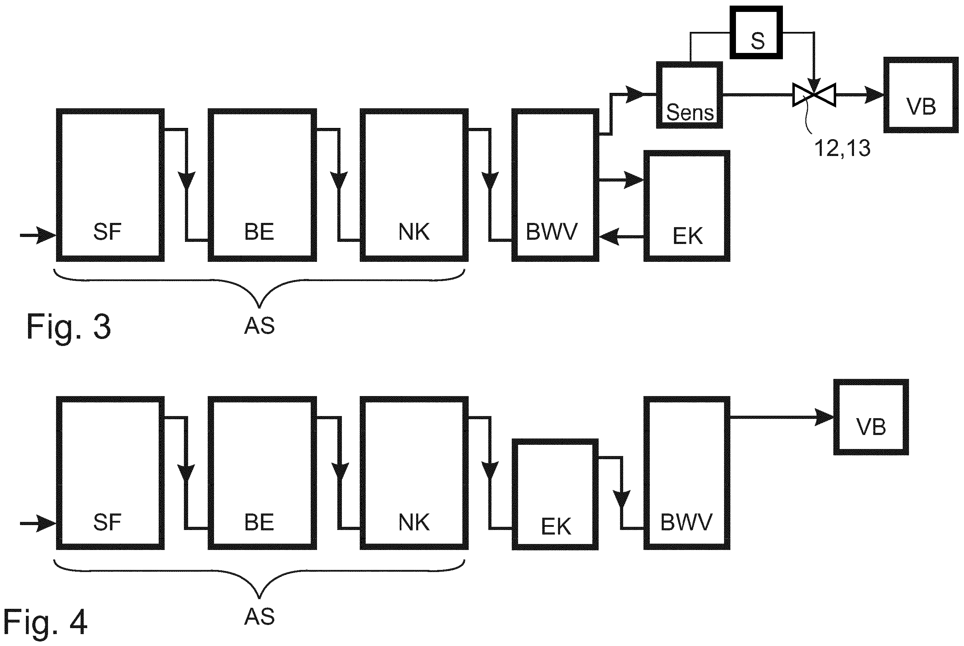

Bei einer bevorzugten Ausgestaltung des Vorschlags ist vorgesehen, dass das Fluid aus der Brauchwasservorlage an den Verbraucher geleitet wird und die Entkeimstation aus der Brauchwasservorlage abgezogenes Fluid nach der Entkeimung in die Brauchwasservorlage zurückspeist. Eine solche Ausgestaltung ist zum Beispiel in Figur 2 bzw. 3 gezeigt. Die Entkeimstation befindet sich nicht unmittelbar zwischen der Brauchwasservorlage und dem Verbraucher, sorgt aber für eine laufende Entkeimung des in der Brauchwasservorlage vorgehaltenen Brauchwassers. Ein solcher Vorschlag erlaubt es, eine Entkeimstation effizient zu betreiben, da diese dauerhaft, laufend für die Aufbereitung des Brauchwassers eingesetzt wird. Der Verbraucher wird direkt aus der Brauchwasservorlage mit entsprechend entkeimtem Brauchwasser versorgt. Günstiger Weise ist es möglich, dass die Entkeimstation dann kleiner zu dimensionieren ist, da diese laufend eingesetzt wird und Spitzenbelastungen leichter auffangbar sind. Die kleiner zu bauende Entkeimstation spart dabei Herstellungs- und Wartungskosten.

Günstiger Weise ist vorgesehen, dass zwischen Brauchwasservorlage und Entkeimstation ein Rücklauf vorgesehen ist, der dazu geeignet ist Fluid aus der Brauchwasservorlage wahlweise zurück zur Entkeimstation zu führen. In dem Fall, dass sich die wenigen, im Fluid verbleibenden Keime in der Brauchwasservorlage vermehren, ermöglicht der Rücklauf in die Entkeimstation eine erneute Entkeimung des Fluids. Wahlweise bedeutet hier, dass der Rücklauf nach Bedarf, insbesondere in Abhängigkeit der Keimanzahl im Fluid in der Brauchwasservorlage geöffnet oder geschlossen werden kann.

Des Weiteren ist in dem Vorschlag vorteilhafter Weise vorgesehen, dass die Aufbereitungsanlage einen Keimsensor aufweist. Ein Keimsensor ist ein Sensor, der in der Lage ist, eine quantitative und/oder qualitative Bestimmung von Keimen durchzuführen. Als Keimsensor im Sinne dieser Anmeldung werden dabei auch Sensoren verstanden, die nicht unmittelbar sondern mittelbar auf die Keimkonzentration, zum Beispiel die Abbauprodukte oder sonstige Parameter, schließen.

In einer vorteilhaften Ausgestaltung ist vorgesehen, dass der Keimsensor als Trübungssensor oder als, auf ein photometrisches Messverfahren beruhendes Sensorsystem ausgebildet ist.

Mithilfe des vorgeschlagenen Trübungssensors wird indiziell auf die Keimkonzentration geschlossen. Im Stand der Technik sind Keimsensoren bekannt, die den Enzymhaushalt bzw. die Enzymproduktion der Keime einfärben und dieser Färbungsgrad ein unmittelbares Maß für die Keimkonzentration ist. Mithilfe eines photometrischen Messverfahrens kann dann die Keimkonzentration bestimmt werden. Günstiger Weise werden Keimsensoren eingesetzt, die ein Maß für die Keimkonzentration in kurzer Zeit zur Verfügung stellen oder dann entsprechende, von der Keimkonzentration abhängige Regelprozesse kurzfristig beeinflussbar sind. Aufgrund der permanenten Reinigung bzw. Entkeimung des Brauchwassers kommt es aber auf einen so schnell reagierenden Sensor nicht an, um den erfindungsgemäßen Erfolg zu erreichen. Es reicht im Sinne der Erfindung auch aus, chargenweise die Keimkonzentration, zum Beispiel in einem abgegrenzten Bereich (zum Beispiel in einem temporär in den Fluidstrom eingekoppelten Messraum), bevorzugt automatisiert zu bestimmen und hieraus dann die Keimkonzentration zu ermitteln. All diese Lösungen gehören zur Erfindung.

Dabei ist insbesondere von Vorteil, dass der Keimsensor in Fließrichtung des Fluids der Brauchwasservorlage, nachgeschaltet ist. Bevorzugt befindet sich dann in Fließrichtung des Fluids nach dem Keimsensor ein, von dem Keimsensor (zum Beispiel direkt) gesteuertes Regelelement (zum Beispiel ein Ventil), um zum Beispiel zu vermeiden, dass eine zu hohe Keimkonzentration an den Verbraucher geleitet wird.

Des Weiteren ist vorgesehen, dass der Keimsensor datentechnisch mit einer Steuerung verbunden ist, und der Keimsensor insbesondere kontinuierlich Werte der Keimkonzentration an die Steuerung übermittelt. Die Steuerung dient geschickter Weise einem automatischen Betrieb der vorgeschlagenen Aufbereitungsanlage. Eine kontinuierliche Datenübermittlung ist dabei natürlich gegebenenfalls auch auf die notwendige Messzeit zur Ermittlung der Keimkonzentration und dem daraus resultierenden Messzyklus anzupassen.

Geschickter Weise ist vorgesehen, dass die Steuerung auf ein Ventil wirkt, das insbesondere in Fließrichtung des Fluids dem Keimsensor nachgeschaltet ist. Dieser Vorschlag erlaubt es, dass eine von dem Keimsensor ermittelte, intolerant hohe Keimkonzentration in der Steuerung zu einem Befehl führt, um ein, nach dem Keimsensor angeordnetes Ventil zu schließen oder so umzustellen, dass das zur Weiterleitung an den Verbraucher vorgesehene Brauchwasser die Aufbereitungsanlage nicht verlässt. Solch ein Vorschlag erhöht die Betriebssicherheit und den Gesundheitsschutz erheblich.

Vorteilhafter Weise ist dabei vorgesehen, dass das Ventil als Absperrventil und/oder als Umschaltventil ausgebildet ist.

In einer weiteren bevorzugten Ausführungsform ist vorgesehen, dass die Entkeimstation und/oder die Brauchwasservorlage in Fließrichtung des Fluids dem Keimsensor und insbesondere dem Ventil nachgeschaltet ist. Dieser Vorschlag erlaubt es, eine intelligente Leitung des aufbereiteten Brauchwassers vorzusehen. Für den Fall, dass eine zu hohe Keimkonzentration von dem Keimsensor entdeckt wird, wird das Brauchwasser nach dem Keimsensor, an einem (Umschalt-) Ventil in die Entkeimstation und nicht in die Brauchwasservorlage geleitet.

Des Weiteren ist günstiger Weise vorgesehen, dass die Steuerung mit einer von dem Ort der Aufbereitungsanlage entfernten Leitwarte verbunden ist, und die Steuerung Werte der Keimkonzentration an die Leitwarte überträgt. Ein solcher Vorschlag erlaubt es, dass in einer zentral angeordneten Leitwarte auch eine Mehrzahl von dezentral, örtlich verteilten Aufbereitungsanlagen überwacht werden. Durch die vorgeschlagene Leitwarte ist es zum einen möglich, den aktuellen Betriebszustand der Aufbereitungsanlage zu überwachen und zu kontrollieren. Selbstverständlich ist es möglich, dass über die Leitwarte auch Steuerungsbefehle vorgenommen werden können, d.h., über die Leitwarte kann auf die Steuerung zugegriffen werden, die dann ihrerseits die entsprechenden Regelelemente stellt. Die Leitwarte erlaubt einen Fernzugriff, aber auch eine Fernwartung. Diese Fernwartung oder Ferndiagnostik senkt die Betriebskosten, da über eine intelligente Auswertung und Übermittlung der Zustandsparameter aus der Ferne entschieden werden kann, ob ein Monteur vor Ort eingreifen muss.

Als von dem Ort der Aufbereitungsanlage entfernten Leitwarte wird eine Distanz angesehen, die eine unmittelbare Inaugenscheinnahme der Aufbereitungsanlage nicht mehr ermöglicht. Dem Fachmann ist bekannt, ab welcher Distanz der Einsatz einer Leitwarte, wie vorgeschlagen, sinnvoll ist.

Die Offenbarung dieser Anmeldung umfasst daher auch ein System bestehend aus mindestens einer Aufbereitungsanlage und einer Leitwarte.

Des Weiteren umfasst die Offenbarung dieser Anmeldung bei dem vorbeschriebenen System auch eine Ausgestaltung der Aufbereitungsanlage, die sowohl mit, als auch ohne eine Entkeimstation und/oder ohne eine Brauchwasservorlage realisiert ist. Es ist gefunden worden, dass der Einsatz des vorgenannten Keimsensors eine erhebliche Verbesserung des Standes der Technik ist, die auch die eingangs beschriebene Aufgabe in gleicher Weise löst, weil über die Leitwarte/Ferninformation auch entsprechende schädliche Zustände der überwachten Aufbereitungsanlage an eine Überwachungsperson übermittelt werden Können. Die übermittelten Informationen/Zustände, können dann zum Beispiel auch eine Nachricht für eine Gesundheitsgefährdung aufgrund zu hoher Keimkonzentration beinhalten.

Es ist klar, dass die Erfindung insofern auch die Verwendung einer solchen Aufbereitungsanlage bzw. eines Keimsensor aus in einem solchen System auch umfasst.

Daher umfasst das System auch eine Einrichtung, dass von der Leitwarte bzw. der Steuerung über das Telefon-, bzw. Handy-Netz Informationen versandt werden, bzw. die Leitwarte via Internet mit der Steuerung verbindbar ist.

Des Weiteren ist in dem Vorschlag vorteilhafter Weise vorgesehen, dass die Entkeimstation und/oder die Brauchwasservorlage in Fließrichtung des Fluids dem Keimsensor und insbesondere dem Ventil nachgeschaltet ist und das Ventil als Umschaltventil ausgebildet ist, und das Fluid in Abhängigkeit der im Keimsensor ermittelten Keimkonzentration unter Umgehung der Entkeimstation über eine Rohrleitung direkt in die Brauchwasservorlage fließt.

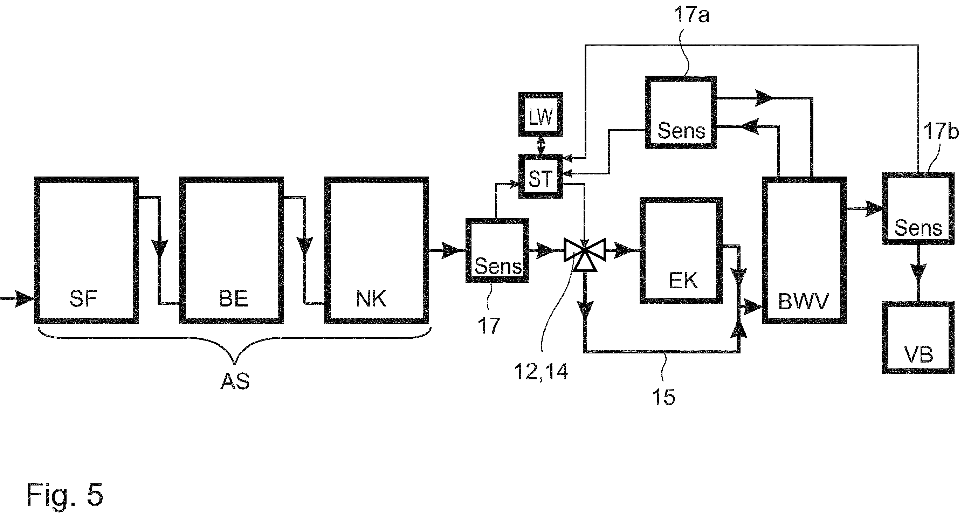

Dieses Konzept ist insbesondere in Figur 5 gezeigt. Das hier gezeigte Konzept bietet den Vorteil, dass die Entkeimstation nur dann mit Brauchwasser beaufschlagt wird, wenn es tatsächlich notwendig ist. Gegebenenfalls ist ein weiterer Sensor vorgesehen, der die Keimkonzentration in der Brauchwasservorlage überwacht.

Bei einer weiteren bevorzugten Ausgestaltung des Vorschlags ist vorgesehen, dass in Fließrichtung des Fluids der Keimsensor der Brauchwasservorlage und die Entkeimstation dem Keimsensor nachgeschaltet ist, wobei zwischen dem Keimsensor und der Entkeimstation ein mit der Steuerung verbundenes Umschaltventil vorgesehen ist, das je nach Stellung des Umschaltventil das Fluid in die Entkeimstation oder an den Verbraucher leitet.

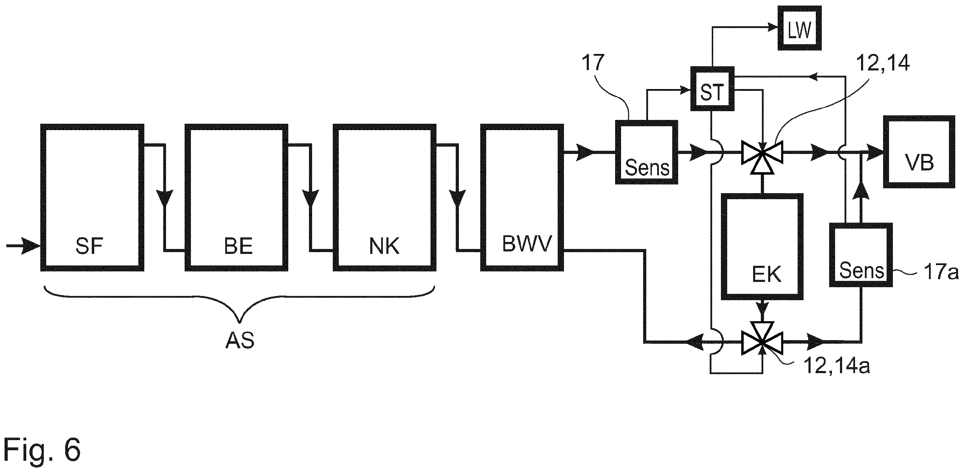

Dieses Konzept ist insbesondere in Figur 6 gezeigt. Der Keimsensor ist zwischen der Brauchwasservorlage und der Entkeimstation angeordnet. Ermittelt dieser erste Keimsensor eine zu hohe Keimkonzentration, so wird das Brauchwasser der Entkeimstation zugeleitet. Ausgangsseitig an der Entkeimstation befindet sich dann ein weiteres, zweites Umschaltventil, welches das Brauchwasser entweder zum Verbraucher oder zurück in die Brauchwasservorlage leitet. Gesteuert wird die Stellung dieses zweiten Umschaltventils von einem zweiten Keimsensor, der zwischen dem zweitem Ventil und dem Verbraucher angeordnet ist und so letztendlich eine Qualitätsprüfung der Entkeimstation darstellt. Über diesen Kreis kann auch das in der Brauchwasservorlage vorgehaltene Brauchwasser kontinuierlich entkeimt werden, auch wenn kein Verbraucher Brauchwasser anfordert.

Daher ist es günstig, dass in Fließrichtung des Fluids nach der Entkeimstation ein, mit der Steuerung verbundenes Umschaltventil vorgesehen ist, das je nach Stellung des Umschaltventils das Fluid in die Brauchwasservorlage oder an den Verbraucher leitet.

Des Weiteren ist vorgesehen, dass die Entkeimstation sowohl eine unmittelbare Reduktion der Keimkonzentration wie auch gleichzeitig eine Aufspaltung langkettiger und/oder komplexer Moleküle, insbesondere Kohlen-Wasserstoff-Verbindungen, insbesondere durch Oxidation, bewirkt. Die Offenbarung dieser Erfindung umfasst für die Ausgestaltung der Entkeimstation einen sehr variablen Aufbau. So hat, wie bereits ausgeführt, die Entkeimstation nicht nur die primäre Aufgabe für ein Abtöten der schädlichen Keime zu sorgen, sondern besitzt auch eine Ausstattung, langkettige bzw. komplexe Moleküle (zum Beispiel Moleküle mit Ringstrukturen, wie zum Beispiel Benzol, oder verzweigte Moleküle, PCB und ähnliches) aufzuspalten, um diese dann zum Beispiel in einer der Entkeimstation wiederum nachgeschalteten Belebungseinheit weiter abzuarbeiten.

In einer Variante des Vorschlages ist daher vorgesehen, zwischen der Entkeimstation und der Brauchwasservorlage eine (weitere) biologische Belebungseinheit vorzusehen, oder aber die Ableitung der Entkeimstation wieder in die eingangsseitige Aufbereitungsstufe zu leiten, da sich dort nach der biologischen Belebungseinheit eine Nachklärstufe befindet.

Der Pfiff dieses Vorschlages liegt darin, dass die Entkeimstation einen synergistischen Beitrag leistet. Die Bakterien der biologischen Belebungseinheit sind nämlich oftmals nicht in der Lage komplexe Moleküle aufzuschließen und abzuarbeiten. Würde aber diese Vorarbeit von der so ausgestatteten Entkeimstation geleistet, wird die Qualität des Brauchwassers erheblich gesteigert, ohne dabei eine unzumutbare Anreicherung an Keimen zu riskieren.

In einer vorteilhaften Ausgestaltung ist vorgesehen, dass die Entkeimstation als UV Entkeimstation, katalytische Oxidationsstufe, katalytische Nassoxidationsstufe und/oder unter Einsatz von Desinfektionsmitteln, wie insbesondere Ozon, Wasserstoffperoxid oder Chlor wirkende Entkeimstation ausgebildet ist. Die hier beschriebenen Varianten für die Ausgestaltung einer Entkeimstation sind nicht abschließend.

Geschickter Weise ist vorgesehen, dass die Aufbereitungsstufe in Fließrichtung des Fluids zunächst einen Schlammfang, dann eine biologische Belebungseinheit und insbesondere eine Nachklärstufe aufweist.

In einer weiteren bevorzugten Ausführungsform ist vorgesehen, dass der Schlammfang einen Filter, insbesondere ein Spaltsieb aufweist. Das oberflächennah vorgesehene Spaltsieb vermeidet, dass Verunreinigungen, die an der Oberfläche des Schmutzwassers treiben, in die Belebungseinheit gelangen und diese dann schädigen oder verunreinigen. Das Spaltsieb zeichnet sich zum einen dadurch aus, dass es ein verhältnismäßig kleinen Querschnitt aufweist, durch den die Flüssigkeit abgezogen wird und zum anderen der Eintrittspunkt der Flüssigkeit in das Sieb (welches mit einer Leitung mit der Belebungseinheit verbunden ist) unterhalb der Flüssigkeitsoberfläche des im Schlammfang stehenden Schmutzwassers ist. Das hier vorgeschlagene Spaltsieb besitzt also zwei Filterkriterien für die Verunreinigung, zum einen die Größe und zum anderen die Dichte der Verunreinigung.

Des Weiteren ist günstiger Weise vorgesehen, dass die Brauchwasservorlage einen Absetzbereich aufweist, der mit einer Rohrleitung mit einem Schlammfang der Aufbereitungsstufe verbunden ist, der in Fließrichtung des Fluids vor der Brauchwasservorlage angeordnet ist. Durch diesen Vorschlag wird erreicht, dass die Brauchwasservorlage auch als Schlammfang einsetzbar ist und das Material, dass sich hier absetzt, in den eigentlich hierfür vorgesehenen Schlammfang abgeleitet wird.

Des Weiteren ist in dem Vorschlag vorteilhafter Weise vorgesehen, dass in Fließrichtung des Fluids direkt vor dem Verbraucher ein Sicherheitsventil vorgesehen ist, welches geeignet ist, den Fluss des Fluids zum Verbraucher abzusperren und welches insbesondere von der Steuerung steuerbar ist. Dieses Sicherheitsventil sperrt die Entnahme von Fluid, falls die Keimkonzentration oder die Anzahl der Keime im Fluid größer als ein Grenzwert ist.

In einer weiteren bevorzugten Ausführungsform ist vorgesehen, dass eine Reinigungseinheit vorgesehen ist, welche über einen Zulauf und einen Ablauf mit der Entkeimstation wahlweise verbindbar ist, wobei die Reinigungseinheit dazu vorgesehen ist, eine Reinigungsflüssigkeit durch die Entkeimstation zu leiten um abgelagertes Material aus der Entkeimstation zu entfernen. Bei längerem Betrieb einer Entkeimstation lagert sich Material, insbesondere organisches Material in der Entkeimstation ab. Dieses abgelagertem Material verschlechtert den Wirkungsgrad der Entkeimstation. Die Reinigungseinheit ist dazu vorgesehen abgelagertes Material aus der Entkeimstation zu entfernen und so den ursprünglichen besseren Wirkungsgrad wiederherzustellen. Unter Reinigungsflüssigkeit sind alle möglichen Flüssigkeiten zu verstehen, die eine Entfernung von abgelagertem Material ermöglichen. Die Wirkungsweise der Reinigungsflüssigkeit kann dabei chemisch, physikalisch oder auch thermisch sein.

Des Weiteren ist vorgesehen, dass die Reinigungsflüssigkeit eine anorganische Säure, eine organische Säure oder eine mechanisch wirkende Reinigungsflüssigkeit ist, wobei die mechanisch wirkende Reinigungsflüssigkeit Schleifkörper mit abrasiver Oberfläche enthält.

Die Erfindung umfasst weiterhin eine Fahrzeugreinigungsanlage, insbesondere Selbstbedienungs-Fahrzeugreinigungsanlage zur Reinigung von Fahrzeugen mit einem Fluid, wobei zumindest ein Teil des Fluids nach der Fahrzeugreinigung aufbereitbar und wiederverwendbar ist, umfassend zumindest eine Aufbereitungsanlage nach einer der zuvor beschriebenen Ausführungsformen. Eine erfindungsgemäße Fahrzeugreinigungsanlageermöglicht die Wiederverwendung von Reinigungsfluid, insbesondere Wasser. Durch das vorsehen einer Aufbereitungsanlage innerhalb der Fahrzeugreinigungsanlage wird sichergestellt, dass das wieder verwendete Fluid zumindest keimarm ist. Eine solche Fahrzeugreinigungsanlage ist vorteilhaft, da durch das keimarme Fluid die gesundheitliche Belastung von Personen im Umfeld der Fahrzeugreinigungsanlage deutlich reduziert wird.

Des Weiteren umfasst die Erfindung auch die Verwendung einer Entkeimstation in einer Aufbereitungsanlage, welche Schmutzwasser von Autowaschstraßen oder Autowaschselbstbedienungsplätzen aufbereitet.

In der Zeichnung ist die Erfindung insbesondere in einem Ausführungsbeispiel schematisch dargestellt. Es zeigen:
- Fig. 1 bis 10: je in einem Blockschaltbild verschiedene Ausführungsbeispiele der Erfindung

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Fig. 1 zeigt ein erstes Ausführungsbeispiel der Erfindung. Die Aufbereitungsanlage besteht aus einer Aufbereitungsstufe AS. Dieser ist in Fließrichtung des Fluids (jeweils durch Pfeile gekennzeichnet) zuerst eine Brauchwasservorlage BWV und dann eine Entkeimstation EK nachgeschaltet. Das entkeimte Brauchwasser gelangt über eine Leitung zu dem Verbraucher VB. Die Aufbereitungsstufe AS besteht in Fließrichtung des Fluids zunächst aus einem Schlammfang SF, dann einer biologischen Belebungseinheit BE. An diese schliesst sich dann eine Nachklärstufe NK an. Schlammfang SF, biologische Belebungseinheit BE und Nachklärstufe NK sind je durch Leitungen fluidisch verbunden. Die Brauchwasservorlage BWV ist mit der Nachklärstufe NK über eine Leitung verbunden. Auch die Entkeimstation EK ist mit der Brauchwasservorlage BWV über eine Leitung verbunden. Das Fluid wird in den Leitungen entweder durch Pumpen (nicht gezeigt) oder mittels Schwerkraft gefördert. Dem Fachmann sind entsprechende Konzepte bekannt.

Das von dem Einsatz verschmutzte Schmutzwasser gelangt zuerst in den Schlammfang SF (Pfeil links). In diesem setzen sich aufgrund Gravitation Sedimente und andere schwere Bestandteile im unteren Bereich des Behälters des Schlammfanges SF ab. Oberflächennah ist ein Spaltsieb 11 vorgesehen, das vermeidet, dass in dem Schmutzwasser schwimmende Verunreinigungen in die dem Schlammfang SF nachgeschalteten biologischen Belebungseinheit BE gelangen.

In der biologischen Belebungseinheit BE erfolgt unter Einsatz von Luft und Mikroorganismen ein Abbau bzw. Aufbereitung der im Wasser schwebenden Verunreinigungen wie zum Beispiel Öle, Mineralölrückstände oder sonstige durch die Bakterien aufschliessbaren Verunreinigungen. Hierzu zählen allgemein auch Kohlenwasserstoffverbindungen. Die hierbei entstehenden Abbauprodukte oder auch die abgestorbenen Mikroorganismen, Bakterien setzen sich als Schlamm in der Nachklärstufe NK ab.

Das so aufbereitete Brauchwasser gelangt in die Brauchwasservorlage BWV, der hier die Funktion eines Vorrats oder Puffers erfüllt. Über die Entkeimstation EK gelangt dann das Brauchwasser bei Bedarf zu dem Verbraucher VB.

Als Verbraucher VB ist zum Beispiel jeder Verbraucher, der mit einer gereinigten Brauchwasserqualität betrieben werden kann, gemeint. Dies kann zum Beispiel eine Autowaschanlage, Autowaschstraße, Selbstbedienungswaschplätze, oder sonstige wasserverbrauchende Einrichtungen, die kein Frisch-oder Trinkwasser benötigen, sein.

Fig. 2 zeigt ein weiteres Ausführungsbeispiel der Erfindung. Im Gegensatz zu der Ausgestaltung nach Figur 1 wird hier der Verbraucher VB direkt von der Brauchwasservorlage BWV versorgt. Des Weiteren ist die Entkeimstation EK über eine Zu- und Ableitung mit der Brauchwasservorlage BWV verbunden. Hier ist es möglich, dass gleichzeitig eine Entkeimung des in dem in der Brauchwasservorlage BWV vorgehaltenen Brauchwassers erfolgt, während ein Entkeimen dieses Brauchwassers in der Entkeimstation EK erfolgt. Für einen Transport der Flüssigkeiten sorgen wiederum nicht dargestellte Pumpen oder die Gravitation.

Fig. 3 zeigt ein weiteres Ausführungsbeispiel der Erfindung. Dieses baut auf den Vorschlag von Fig. 2 auf. Die Entkeimstation EK ist über eine Zu- und Ableitung mit der Brauchwasservorlage BWV verbunden. In Fließrichtung des Fluids nach der Brauchwasservorlage BWV befindet sich zuerst der Keimsensor Sens, dann das Absperrventil 12,13 und dann der Verbraucher VB. Entdeckt der Keimsensor Sens eine zu hohe, intolerable Keimkonzentration in dem zum Verbraucher VB geleiteten Brauchwasser, so gibt der Keimsensor Sens der Steuerung ST eine entsprechende Information, die dann das Absperrventil 12,13 schließt.

Fig. 4 zeigt ein weiteres Ausführungsbeispiel der Erfindung. Dieses ist dem Vorschlag von Fig. 1 ähnlich. In Figur 4 ist in Fließrichtung des Fluids die Entkeimstation EK unmittelbar der Nachklärstufe NK nachgeschaltet, die Brauchwasservorlage BWV folgt in Fließrichtung der Entkeimstation EK. Der Verbraucher VB wird direkt aus der Brauchwasservorlage BWV versorgt. Im Vergleich zu der Lösung nach Figur 1 ist die Reihenfolge von Entkeimstation EK und Brauchwasservorlage BWV vertauscht.

Fig. 5 zeigt ein weiteres Ausführungsbeispiel der Erfindung. In Fließrichtung des Fluids schließt sich an die Nachklärstufe NK ein (erster) Keimsensor Sens, 17 an. Dieser erste Keimsensor Sens, 17 ist mit der Steuerung ST verbunden und liefert an diesen permanent Informationen oder Werte über die Keimkonzentration des aus der Aufbereitungsstufe AS austretenden Brauchwassers. Die Steuerung ST wirkt auf ein Umschaltventil 12,14, das in Fließrichtung des Fluids dem ersten Keimsensor Sens, 17 nachgeschaltet ist. Ausgangsseitig besitzt dieses Umschaltventil 12,14 zwei Anschlüsse. Der erste Anschluss verbindet das Umschaltventil 12,14 mit der Entkeimung Station EK. Ausgangsseitig ist an der Entkeimstation EK die Brauchwasservorlage BWV angeschlossen. Der zweite Anschluss an dem Umschaltventil 12,14 verbindet dieses mit der Leitung 15 direkt mit der Brauchwasservorlage Vorlage BWV, unter Überbrückung der Entkeimstation EK.

Ist die Keimkonzentration, die von dem ersten Keimsensor Sens, 17 gemessen wird, günstig, so braucht das Brauchwasser nicht über die Entkeimstation EK geleitet werden und wird direkt über die Leitung 15 in die Brauchwasservorlage BWV geleitet. Die Entkeimstation EK wird entsprechend geschont. Ist die Keimkonzentration in dem ersten Keimsensor Sens, 17 zu hoch, erfolgt eine Entkeimung des Brauchwassers in der Entkeimstation EK. Die Steuerung ST wirkt in geeigneter Weise auf das Umschaltventil 12,14.

Die Qualität des in der Brauchwasservorlage BWV vorgehalten Brauchwassers wird von einem (zweiten) Keimsensor Sens, 17a überwacht. Hierzu ist der zweite Keimsensor Sens, 17a mit je einer Zu- und Ableitung mit der Brauchwasservorlage BWV verbunden. Auch dieser zweite Keimsensor Sens, 17a liefert permanent die ermittelten Daten an die Steuerung ST.

Ein weiterer (dritter) Keimsensor Sens, 17b befindet sich nach der Brauchwasservorlage BWV zwischen dieser und dem Verbraucher VB.

In dem hier gezeigten Ausführungsbeispiel ist kein weiteres Regelelement vorgesehen, das von der Steuerung ST gesteuert wird und hierbei die Information des zweiten Keimsensor Sens, 17a bzw. das dritten Keimsensor Sens, 17b auswertet. Selbstverständlich sieht aber die Erfindung auf vor, dass zum Beispiel abschließend ein Absperrventil vor dem Verbraucher VB vorgesehen ist, um das Ableiten von Brauchwasser zu vermeiden, dass in zumindest einem der beiden Keimsensoren Sens, 17a, 17b als nicht brauchbar qualifiziert wurde.

Geschickter Weise ist eine Leitwarte LW vorgesehen, die über eine bidirektionale Datenleitung (drahtgebunden oder auch via Funk) mit der Steuerung ST verbunden ist und so eine Fernwartung, Fernsteuerung und oder auch Ferndiagnostik erlaubt.

Dem Fachmann ist klar, dass die in Figur 5 gezeigten verschiedenen Varianten nicht ein einziges Ausführungsbeispiel beschreiben sondern natürlich die einzelnen Komponenten einzeln oder teilweise miteinander kombiniert und ebenfalls einsetzbar sind und den erfindungsgemäßen Erfolg zeigen. Insofern zeigt Figur 5 mehrere Ausführungsbeispiele gemäß der Erfindung.

Fig. 6 zeigt ein weiteres Ausführungsbeispiel der Erfindung. Dieses baut auf teilweise auf den Vorschlag von Fig. 3 auf. An die Nachklärstufe NK schließt sich in Figur 6 die Brauchwasservorlage BWV an. Die Brauchwasservorlage BWV besitzt eine Ableitung und zwei Zuleitungen. Die erste Zuleitung verbindet die Brauchwasservorlage BWV mit der in Fließrichtung des Fluids davor angeordneten Nachklärstufe NK. Über die Ableitung ist die Brauchwasservorlage BWV mit dem (ersten) Keimsensor Sens, 17 verbunden. Dieser erste Keimsensor Sens, 17 ist mit der Steuerung ST verbunden und liefert an diesen permanent Informationen oder Werte über die Keimkonzentration des aus der Aufbereitungsstufe AS austretenden Brauchwassers. Die Steuerung ST wirkt auf ein Umschaltventil 12,14, das in Fließrichtung des Fluids dem ersten Keimsensor Sens, 17 nachgeschaltet ist. Ausgangsseitig besitzt dieses Umschaltventil 12,14 zwei Anschlüsse.

Der erste Anschluss verbindet das Umschaltventil 12,14 mit der Entkeimstation EK. Ausgangsseitig ist die Entkeimstation EK mit einem zweiten Umschaltventil 12,14a verbunden. Dessen erster Ausgang verbindet das zweite Umschaltventil 12, 14a mit der Brauchwasservorlage BWV, dies ist die zweite Zuleitung der Brauchwasservorlage BWV (siehe oben).

Der zweite Anschluss verbindet das Umschaltventil 12,14a mit einem weiteren, zweiten Keimsensor Sens, 17a, der zwischen dem zweiten Umschaltventil 12,14a und dem Verbraucher VB angeordnet ist. Dieser zweite Keimsensor Sens, 17a dient als Qualitätskontrolle der Entkeimstation EK und ist natürlich auch datentechnisch mit der Steuerung ST verbunden. Dabei wirkt die Steuerung ST auch auf das zweite Umschaltventil 12,14a und steuert je nach Bedarf und oder je nach Qualität das aus der Entkeimstation EK ablaufende Brauchwasser entweder zurück in die Brauchwasservorlage oder zu den Verbraucher.

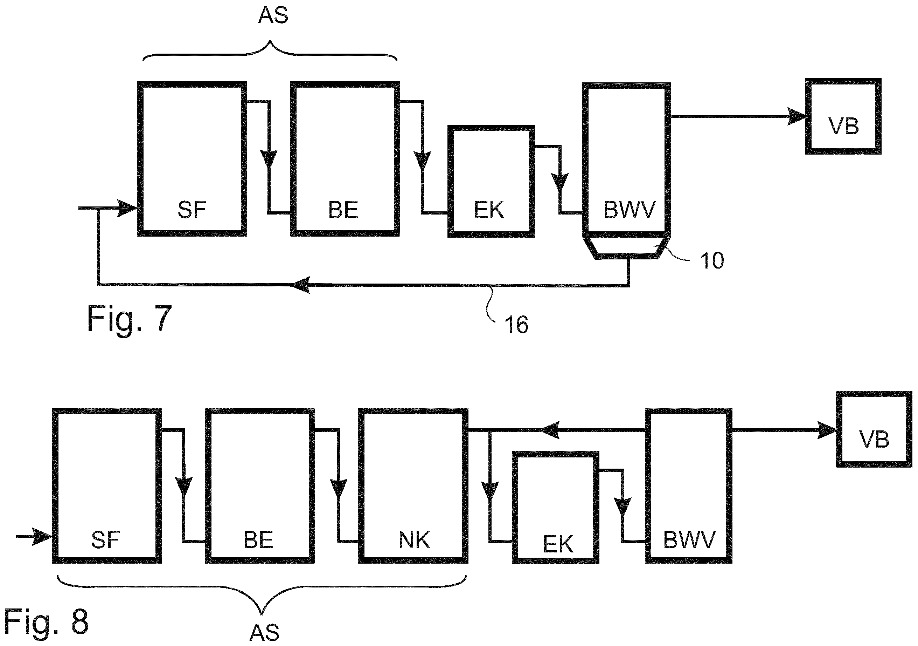

Erfindungsgemäß muss die Aufbereitungsstufe AS nicht eine Nachklärstufe umfassen. In Figur 7 ist eine solche Variante gezeigt, die Entkeimstation EK befindet sich nach der biologischen Belebungseinheit BE (in Fließrichtung des Fluides) und vor der Brauchwasservorlage BWV. In der hier auch ausgeführten Brauchwasservorlage BWV befindet sich im unteren Bereich ein zusätzlicher Schlammfang 10, zum Beispiel konischer Bereich, der die Brauchwasservorlage BWV hier auch Nachkläraufgabe mitübernimmt. Dieser Schlammfang 10 ist mit einer Leitung 16 mit dem eingangsseitig an der Aufbereitungsstufe AS vorgesehenen Schlammfang SF verbunden. Eine nicht dargestellte Pumpe sorgt dafür, bei Bedarf den im Schlammfang 10 angefallenen Schlamm in den großen Schlammfang SF umzupumpen.

Fig. 8 zeigt ein weiteres Ausführungsbeispiel der Erfindung. Dieses baut auf den Vorschlag von Fig. 4 auf. Zusätzlich zu der Ausgestaltung nach Figur 4 ist in der Variante nach Figur 8 eine Rückleitung aus der Brauchwasservorlage BWV zum Eingang der Entkeimstation EK vorgesehen. Der Verbraucher VB wird aus der Brauchwasservorlage BWV versorgt. Das hier gezeigte Schaltungskonzept stellt sicher, dass die Entkeimstation EK permanent mit Brauchwasser beaufschlagt wird und bewirkt somit eine dauernde Entkeimung des zur Verfügung stehenden Brauchwassers.

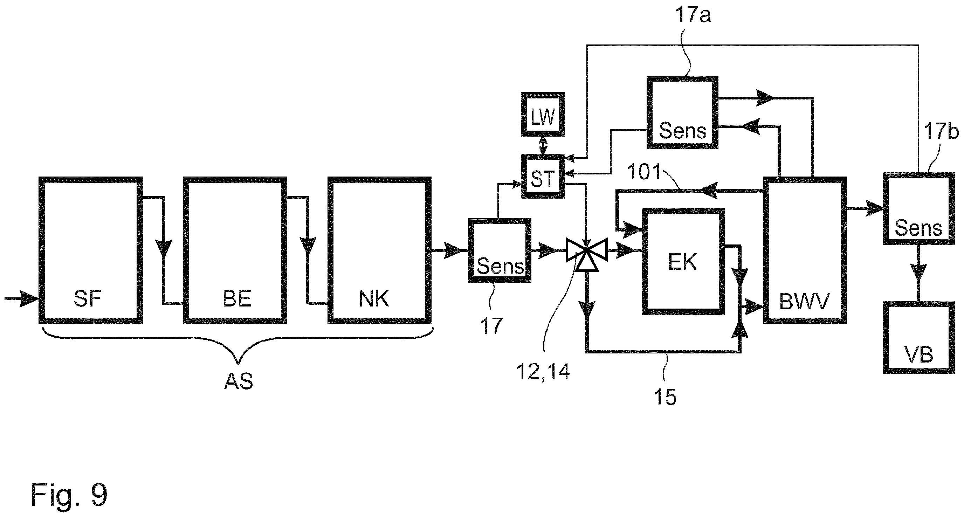

Fig. 9 zeigt ein weiteres Ausführungsbeispiel der Erfindung. Dieses Ausführungsbeispiel baut auf dem Vorschlag von Fig. 5 auf. Somit trifft die Beschreibung von Fig. 5, soweit nicht anders dargestellt, auch für Fig. 9 zu. Zusätzlich zu dem Ausführungsbeispiel in Fig. 5 ist ein Rücklauf (101) von der Brauchwasservorlage BWV zur Entkeimstation EK vorgesehen. Ein derartiges Konzept ist auch in Fig. 8 zu sehen, wobei der Rücklauf 101 in Fig. 9 der Rückleitung in Fig. 8 entspricht. Der Rücklauf 101 ermöglicht es, in der Brauchwasservorlage BWV gespeicherte Flüssigkeit oder Wasser zurück zur Entkeimstation EK zu führen. Gerade bei hohen Temperaturen im Sommer kann es passieren, dass sich wenige im Wasser verbliebene Keime in der Brauchwasservorlage BWV stark vermehren, wenn wenig Flüssigkeitsdurchsatz in der Aufbereitungsanlage erfolgt. In diesem Fall ermittelt der Sensor 17a eine erhöhte Keimbelastung in der Brauchwasservorlage BWV. Um die Keimzahl in der Brauchwasservorlage BWV wieder zu reduzieren und so zu einer keimarmen Flüssigkeit zu gelangen, wird der Rücklauf 101 geöffnet und zumindest ein Teil des Inhalts der Brauchwasservorlage BWV zurück in die Entkeimstation EK geleitet, wo die Keimanzahl stark reduziert wird. Nach der Entkeimstation EK wird die Flüssigkeit bzw. das Wasser, wie in Fig. 5 beschrieben, wieder zurück in die Brauchwasservorlage BWV geführt. Durch das Vorsehen des Rücklaufs 101 ist es somit möglich, einen kontinuierlichen Kreislauf von Flüssigkeit zwischen Brauchwasservorlage BWV und Entkeimstation EK zu erzeugen. Ein solcher Kreislauf stellt sicher, dass die Keimanzahl in der Brauchwasservorlage BWV ein gewisses, als zulässig erachtetes Maß nicht überschreitet. Durch diesen Kreislauf kann keimarmes Wasser in der Brauchwasservorlage BWV auch dann sichergestellt werden, wenn vom Verbraucher VB längere Zeit keine Flüssigkeit abgenommen wird. Wie bereits beschrieben, wird die Keimanzahl in der Brauchwasservorlage BWV kontinuierlich vom Sensor 17a überwacht, welcher wiederum Daten an die Steuerung ST übermittelt. Bevorzugt wird der Rücklauf 101 von der Steuerung ST geöffnet oder geschlossen. Dazu ist im Rücklauf 101 oder in der Brauchwasservorlage BWV ein Ventil vorgesehen, welches den Durchfluss durch den Rücklauf 101 steuert. Das Ventil kann auch so ausgeführt sein, dass es verschiedene Durchflussmengen durch den Rücklauf 101 einstellen kann und als analoges Ventil wirkt. Das Ventil wird von der Steuerung ST geregelt. So kann beispielsweise bei einer Keimbelastung in der Brauchwasservorlage BWV, die leicht über dem zulässigen Grenzwert liegt, mithilfe des Sensors 17a, der Steuerung ST und des Ventils im Rücklauf 101 ein geringer Volumenstrom zurück von der Brauchwasservorlage BWV zur Entkeimstation EK eingestellt werden. Liegt dagegen die Keimanzahl in der Brauchwasservorlage BWV stark über dem zulässigen Grenzwert, kann ein entsprechend größerer Volumenstrom durch den Rücklauf 101 eingestellt werden. Alternativ kann der Durchfluss durch den Rücklauf 101 auch rein manuell eingestellt werden, für diesen Fall wäre im Rücklauf 101 ein beispielsweise handbetätigtes Ventil vorzusehen.

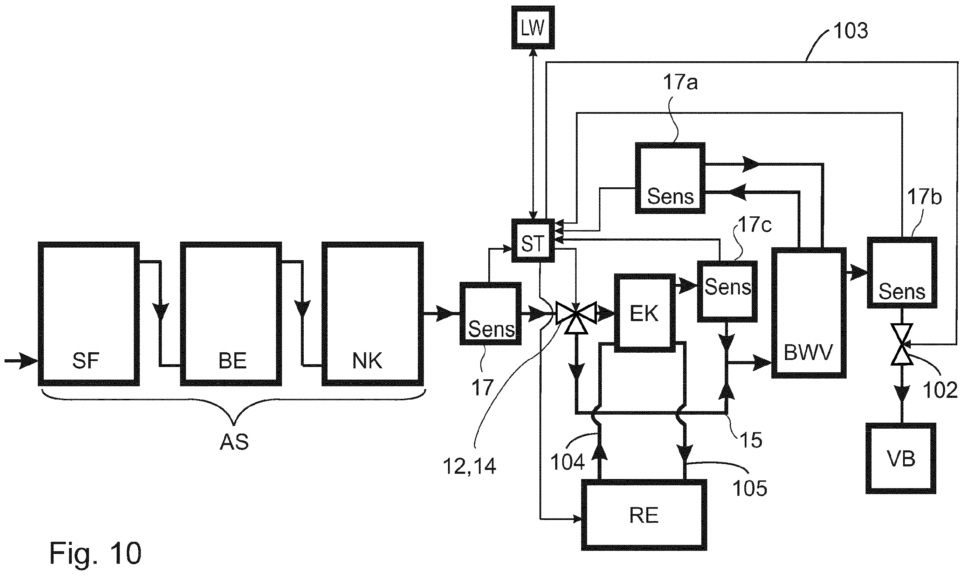

Fig. 10 zeigt ein weiteres Ausführungsbeispiel der Erfindung. Dieses Ausführungsbeispiel baut ebenfalls auf dem Vorschlag von Fig. 5 auf. In dem Ausführungsbeispiel in Fig. 10 kann zusätzlich, analog zu dem Ausführungsbeispiel in Fig. 9 ein Rücklauf 101 von der Brauchwasservorlage BWV zur Entkeimstation EK vorgesehen sein. In dem Ausführungsbeispiel in Fig. 10 ist zusätzlich ein Sicherheitsventil 102 zwischen dem Sensor 17b und dem Verbraucher VB angeordnet. Dieses Sicherheitsventil 102 wird durch die Steuerleitung 103 von der Steuerung ST geöffnet oder geschlossen. Das Sicherheitsventil 102 dient dazu, falls durch die Sensoren 17, 17a, 17b oder 17c zu hohe Keimanzahlen ermittelt werden, die Entnahme von Flüssigkeit durch den Verbraucher VB zu stoppen. Für die Steuerung des Sicherheitsventils 102 sind insbesondere die ermittelten Keimwerte des Sensors 17b relevant, der direkt in Flussrichtung vor dem Verbraucher VB angeordnet ist. Eine zu hohe Keimanzahl in der vom Verbraucher VB entnommenen Flüssigkeit kann zu einer gesundheitlichen Gefährdung von Personen führen, die mit der vom Verbraucher VB entnommenen Flüssigkeit in Kontakt kommen. Insbesondere beim Einsatz der Aufbereitungsanlage in einer (Selbstbedienungs-)Anlage zur Fahrzeugreinigung kann keimbelastetes Wasser zu gesundheitlichen Risiken führen. Ist der Verbraucher VB beispielsweise als Reinigungsdüse ausgeführt, kann vernebeltes Wasser aus der Brauchwasservorlage BWV in die Lungen von Personen eindringen und darin enthaltene Keime Krankheiten verursachen. Das Sicherheitsventil 102 stellt somit eine letzte Sicherheitsinstanz dar, welche bei einem Ausfall einer oder mehrerer Komponenten der Aufbereitungsanlage verhindert, dass keimbelastetes Wasser zum Verbraucher VB gelangt. Ein solches Sicherheitsventil 102 ist besonders wichtig bei Anwendungen, bei denen kein geschultes Personal anwesend ist, um die ausgegebene Qualität des ausgegebenen Fluids bzw. Wassers zu prüfen. Ein Sicherheitsventil 102 ist beispielsweise bei Selbstbedienungs-Fahrzeugreinigungsplätzen vorzusehen.

Zusätzlich zu dem in Fig. 5 dargestellten Ausführungsbeispiel ist in Fig. 10 ein weiterer Sensor 17c zur Ermittlung der Keimbelastung in der Flüssigkeit / des Fluids vorgesehen, die die Entkeimstation EK verlässt. Der Sensor 17c ermittelt die Keimanzahl der Flüssigkeit in Flussrichtung nach der Entkeimstation EK und übermittelt dazu kontinuierlich Signale an die Steuerung ST. Anhand dieser Signale erkennt die Steuerung ST die Qualität der Flüssigkeit oder des Wassers, welches die Entkeimstation EK verlässt. Diese ermittelte Qualität ermöglicht unter anderem eine Bewertung, wie gut oder effizient die Entkeimstation EK aktuell arbeitet. Diese Bewertung kann beispielsweise dazu genutzt werden, eine Wartung oder Reinigung der Entkeimstation EK anzustoßen. Eine solche Wartung oder Reinigung wird weiter unten beschrieben. Die von dem Sensor 17c ermittelten Keimwerte oder Keimanzahlen können weiterhin durch die Steuerung ST mit den von den anderen Sensoren 17, 17a und 17b ermittelten Keimwerten verglichen werden. Durch einen solchen Vergleich kann der Ort einer möglichen Störung in der Anlage genau ermittelt werden und entsprechende Gegenmaßnahmen eingeleitet werden. Zeigt beispielsweise Sensor 17c keimarmes Wasser am Ausgang der Entkeimstation EK und Sensor 17a, der den Inhalt der Brauchwasservorlage BWV überwacht, eine erhöhte Keimanzahl, kann aus dieser Information abgeleitet werden, dass aktuell frisch eintreffende Flüssigkeit aus der Aufbereitungsstufe nicht über die Leitung 15 direkt in die Brauchwasservorlage BWV geführt werden soll, sondern den Weg durch die Entkeimstation EK nehmen soll. Weiterhin könnte eine solche Information dazu genutzt werden, Flüssigkeit aus der Brauchwasservorlage BWV im Kreislauf zurück zur Entkeimstation EK zu führen, was im Ausführungsbeispiel nach Fig. 9 ausführlich beschrieben ist und mit dem Ausführungsbeispiel in Fig. 10 kombiniert werden kann.

In dem Ausführungsbeispiel in Fig. 10 ist weiterhin eine Reinigungseinheit RE für die Entkeimstation EK vorgesehen. Eine solche Reinigungseinheit RE kann mit sämtlichen beschriebenen Ausführungsbeispielen kombiniert werden und auch in Verbindung mit den anderen Ausführungsbeispielen zur Optimierung der Funktion der Entkeimstation EK eingesetzt werden. Eine mögliche Ausführungsform der Entkeimstation EK ist die Ausführung als UV-Entkeimstation. Selbstverständlich kann die Entkeimstation EK auch anders ausgeführt sein. Bei einer UV-Entkeimstation wird ultraviolettes Licht, insbesondere UVc-Strahlung, dazu genutzt, um Keime abzutöten oder zumindest daran zu hindern, sich zu vermehren. UV-Entkeimstationen weisen eine oder mehrere UV-Lichtquellen auf, die UV-Licht in und durch die aufzubereitende bzw. zu entkeimende Flüssigkeit leiten. Für eine sichere und effiziente Funktion einer solchen UV-Entkeimstation muss sichergestellt sein, dass das UV-Licht die gesamte, durch die Entkeimstation EK geleitete Flüssigkeit erreicht. Nach längerem Betrieb einer solchen Entkeimstation EK kann es vorkommen, dass sich Material, organischer oder anorganischer Natur auf den UV-Lichtquellen absetzt und so die Ausstrahlung von UV-Licht behindert oder sogar ganz unterbindet. In diesem Fall sinkt die Leistung der Entkeimstation EK ab, da das UV-Licht nicht mehr die gesamte, durchströmende der Flüssigkeit erreicht und so ein Teil des Volumenstroms ohne Entkeimung die Entkeimstation verlässt. Ist dieser Fall eingetreten, muss das abgesetzte Material, welches das Abstrahlen von UV-Licht in der Entkeimstation EK behindert entfernt werden. Für diesen Zweck ist in dem Ausführungsbeispiel in Fig. 10 die Reinigungseinheit RE vorgesehen. Von der Entkeimstation EK führt ein Ablauf 105 zur Reinigungseinheit RE, von der Reinigungseinheit RE führt ein Zulauf 104 zurück zur Entkeimstation EK. Durch diese Anordnung kann ein Flüssigkeitskreislauf zwischen Reinigungseinheit RE und Entkeimstation EK hergestellt werden. In Fig. 10 sind Zulauf 104 und Ablauf 105 an Stellen mit der Entkeimstation EK verbunden, die unterschiedlich zu den normalerweise verwendeten Anschlüssen führt zu entkeimende Flüssigkeit sind. Selbstverständlich können Zulauf 104 und Ablauf 105 auch an die normalerweise verwendeten Anschlüsse der Entkeimstation EK angeschlossen werden, beispielsweise mithilfe von Zweiwegeventilen. Für die Reinigung der Entkeimstation EK wird die normale Entkeimfunktion beendet bzw. unterbrochen und ein Flüssigkeitskreislauf mit der Reinigungseinheit EK hergestellt. Die Reinigung kann beispielsweiseüber die Durchleitung von organischen oder anorganischen Säuren durch die Entkeimstation EK erfolgen. Diese Säuren, die unter den Oberbegriff der Reinigungsflüssigkeiten fallen, lösen dann abgelagertes Material in der Entkeimstation EK auf und transportieren es im Flüssigkeitskreislauf ab. In der Reinigungseinheit RE sind entsprechende Mittel zur Aufnahme des aufgelösten Materials vorgesehen, beispielsweise Filter. Bei der Verwendung anorganischer Säuren kann nach der Reinigung eine Neutralisierung von in der Entkeimstation EK verbleibenden Säureresten durch eine Nachspülung mit Lauge erfolgen. Werden zur Reinigung organische Säuren eingesetzt, können in der Entkeimstation EK verbleibende Reste dort belassen werden, da sie von selbst nach und nach organisch abgebaut werden. Somit entfällt vorteilhafter Weise bei der Verwendung organischer Säuren als Reinigungsflüssigkeit ein danach durchzuführender Neutralisierungsschritt. Besonders vorteilhaft ist die Verwendung neutraler, mechanisch wirkender Reinigungsflüssigkeit. Eine solche mechanisch wirkende Reinigungsflüssigkeit enthält Schleifkörper, welche sich im Flüssigkeitsstrom bewegen und eine abrasive Oberfläche aufweisen. Wird eine solche Reinigungsflüssigkeit durch die Entkeimstation EK geleitet kratzen die Schleifenkörper mit ihrer abrasiven Oberfläche abgelagertes Material in der Entkeimstation EK ab, wobei das abgekratzte Material im Flüssigkeitsstrom mit- und abgeführt wird. Die Entfernung des abgekratzten Materials aus dem Flüssigkeitsstrom erfolgt dann über entsprechende Mittel in der Reinigungseinheit RE. Solche Mittel können beispielsweise Filter, Zentrifugen, Absetzbecken oder Ähnliches sein. Die Schleifkörper der Reinigungsflüssigkeit sind bevorzugt klein, beispielsweise in der Größenordnung eines Durchmessers von wenigen Zehntel Millimetern bis zu wenigen Millimetern. Die Schleifkörper können dabei aus verschiedenen Materialien bestehen. Denkbar wären Schleifkörper aus anorganischem Material, wie beispielsweise feiner Sand oder Schleifenkörper aus organischem Material. In biologischen Klärstufen kommen sogenannte Aufwuchskörper zum Einsatz, die elastisch ausgeführt sind. Auch die Verwendung solcher Aufwuchskörper mit entsprechend abrasiver Oberfläche als Schleifmittel ist denkbar. Bei der Reinigung kann es passieren, dass die abrasive Oberfläche sich durch abgekratztes Material zusetzt und dadurch die Schleifwirkung nachlässt. Nach Abschluss der Reinigung der Entkeimstation EK kann das Schleifmittel bzw. die Reinigungsflüssigkeit regeneriert werden, um die abrasive Oberfläche der Schleifmittel wiederherzustellen. Eine solche Regeneration kann innerhalb oder außerhalb der Reinigungseinheit RE erfolgen. Für die Wiederherstellung der abrasiven Oberfläche der Schleifmittel können verschiedene Verfahren eingesetzt werden. Beispielsweise kann das die Oberfläche zusetzende Material durch Säure oder andere Lösungsmittel entfernt werden. Alternativ können die Schleifmittel mechanisch gereinigt werden, beispielsweise indem sie gegenseitig aneinander gerieben werden und sich so das abgesetzte Material löst. Bevorzugt wird die Reinigungseinheit RE durch die Steuerung ST geregelt, was mit einer Datenleitung von der Steuerung ST zur Reinigungseinheit RE in Fig. 10 dargestellt ist. Die Reinigungseinheit RE und die Anschlüsse Zulauf 104 und Ablauf 105 können aber auch manuell bedient werden und ohne automatische Steuerung oder Regelung eingesetzt werden.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Aufbereitungsanlage für Flüssigkeiten, insbesondere für Wasser, welche mindestens eine Aufbereitungsstufe (AS) und dieser in Fließrichtung des Fluids nachgeschaltet, eine Brauchwasservorlage (BWV) und eine Entkeimstation (EK) aufweist und die Brauchwasservorlage (BMV) in Fließrichtung des Fluids der Entkeimstation (EK) nachgeschaltet ist und das Fluid aus der Brauchwasservorlage (BWV) an den Verbraucher (VB) geleitet wird, wobei die Aufbereitungsstufe (AS) in Fließrichtung des Fluids zunächst einen Schlammfang (SF), dann eine biologische Belebungseinheit (BE) und insbesondere eine Nachklärstufe (NK) aufweist und die Entkeimstation (EK) als UV-Entkeimstation, katalytische Oxidationsstufe, katalytische Nassoxidationsstufe und/oder unter Einsatz von Desinfektionsmitteln, wie insbesondere Ozon, Wasserstoffperoxid oder Chlor wirkende Entkeimstation (EK) ausgebildet ist.

2. Aufbereitungsanlage nach Anspruch 1, **dadurch gekennzeichnet, dass** die Entkeimstation (EK) aus der Brauchwasservorlage (BWV) abgezogenes Fluid nach der Entkeimung in die Brauchwasservorlage (BWV) zurückspeist.

3. Aufbereitungsanlage nach Anspruch 1, **dadurch gekennzeichnet, dass** zwischen Brauchwasservorlage (BWV) und Entkeimstation (EK) ein Rücklauf (101) vorgesehen ist, der dazu geeignet ist, Fluid aus der Brauchwasservorlage (BWV) wahlweise zurück zur Entkeimstation (EK) zu führen.

4. Aufbereitungsanlage nach einem der vorhergehenden Ansprüche, **dadurch gekennzeichnet, dass** die Aufbereitungsanlage einen Keimsensor (Sens) aufweist, und insbesondere der Keimsensor (Sens) datentechnisch mit einer Steuerung (ST) verbunden ist, und der Keimsensor (Sens) insbesondere kontinuierlich Werte der Keimkonzentration an die Steuerung (ST) übermittelt.

5. Aufbereitungsanlage nach Anspruch 4, **dadurch gekennzeichnet, dass** die Steuerung (ST) auf ein Ventil (12) wirkt, das insbesondere in Fließrichtung des Fluids dem Keimsensor (Sens) nachgeschaltet ist.

6. Aufbereitungsanlage nach einem der Ansprüche 4 oder 5, **dadurch gekennzeichnet, dass** der Keimsensor (Sens) in Fließrichtung des Fluids der Brauchwasservorlage (BWV) nachgeschaltet ist und/oder die Entkeimstation (EK) und/oder die Brauchwasservorlage (BWV) in Fließrichtung des Fluids dem Keimsensor (Sens) und insbesondere dem Ventil (12) nachgeschaltet ist und/oder der Keimsensor (Sens) als Trübungssensor oder als, auf ein photometrisches Messverfahren beruhendes Sensorsystem ausgebildet ist.

7. Aufbereitungsanlage nach einem der Ansprüche 4 bis 6, **dadurch gekennzeichnet, dass** die Steuerung (ST) mit einer von dem Ort der Aufbereitungsanlage entfernten Leitwarte (LW) verbunden ist, und die (ST) Steuerung Werte der Keimkonzentration an die Leitwarte (LW) überträgt.

8. Aufbereitungsanlage nach einem der Ansprüche 4 bis 7, **dadurch gekennzeichnet, dass** die Entkeimstation (EK) und/oder die Brauchwasservorlage (BWV) in Fließrichtung des Fluids dem Keimsensor (Sens) und insbesondere dem Ventil (12) nachgeschaltet ist und das Ventil als Umschaltventil (14) ausgebildet ist, und das Fluid in Abhängigkeit der im Keimsensor (Sens) ermittelten Keimkonzentration unter Umgehung der Entkeimstation (EK) über eine Rohrleitung (15) direkt in die Brauchwasservorlage (BWV) fließt und/oder in Fließrichtung des Fluids der Keimsensor (Sens) der Brauchwasservorlage (BWV), und die Entkeimstation (EK) dem Keimsensor (Sens) nachgeschaltet ist, wobei zwischen dem Keimsensor (Sens) und der Entkeimstation (EK) ein mit der Steuerung (ST) verbundenes Umschaltventil (12,14) vorgesehen ist, das je nach Stellung des Umschaltventil (12,14) das Fluid in die Entkeimstation (EK) oder an den Verbraucher (VB) leitet.

9. Aufbereitungsanlage nach einem der Ansprüche 4 bis 8, **dadurch gekennzeichnet, dass** in Fließrichtung des Fluids nach der Entkeimstation (EK) ein mit der Steuerung (ST) verbundenes Umschaltventil (12,14a) vorgesehen ist, das je nach Stellung des Umschaltventil (12,14a) das Fluid in die Brauchwasservorlage (BWV) oder an den Verbraucher (VB) leitet.

10. Aufbereitungsanlage nach einem der vorhergehenden Ansprüche, **dadurch gekennzeichnet, dass** der Schlammfang (SF) einen Filter (11), insbesondere ein Spaltsieb aufweist und/oder die Brauchwasservorlage (BWV) einen Absetzbereich (10) aufweist, der mit einer Rohrleitung (16) mit einem Schlammfang (SF) der Aufbereitungsstufe (AS) verbunden ist, der in Fließrichtung des Fluids vor der Brauchwasservorlage (BWV) angeordnet ist.

11. Aufbereitungsanlage nach einem der vorhergehenden Ansprüche, **dadurch gekennzeichnet, dass** die Entkeimstation (EK) sowohl eine unmittelbare Reduktion der Keimkonzentration wie auch gleichzeitig eine Aufspaltung langkettiger und/oder komplexer Moleküle, insbesondere Kohlen-Wasserstoff-Verbindungen, insbesondere durch Oxidation, bewirkt.

12. Aufbereitungsanlage nach einem der vorhergehenden Ansprüche, **dadurch gekennzeichnet, dass** in Fließrichtung des Fluids direkt vor dem Verbraucher (VB) ein Sicherheitsventil (102) vorgesehen ist, welches geeignet ist, den Fluss des Fluids zum Verbraucher (VB) abzusperren und welches insbesondere von der Steuerung (ST) steuerbar ist.

13. Aufbereitungsanlage nach einem der vorhergehenden Ansprüche, **dadurch gekennzeichnet, dass** eine Reinigungseinheit (RE) vorgesehen ist, welche über einen Zulauf (104) und einen Ablauf (105) mit der Entkeimstation (EK) wahlweise verbindbar ist, wobei die Reinigungseinheit (RE) dazu vorgesehen ist, eine Reinigungsflüssigkeit durch die Entkeimstation (EK) zu leiten um abgelagertes Material aus der Entkeimstation (EK) zu entfernen.

14. Aufbereitungsanlage nach Anspruch 13, **dadurch gekennzeichnet, dass** die Reinigungsflüssigkeit eine anorganische Säure, eine organische Säure oder eine mechanisch wirkende Reinigungsflüssigkeit ist, wobei die mechanisch wirkende Reinigungsflüssigkeit Schleifkörper mit abrasiver Oberfläche enthält.

15. Fahrzeugreinigungsanlage, insbesondere Selbstbedienungs-Fahrzeugreinigungsanlage zur Reinigung von Fahrzeugen mit einem Fluid, wobei zumindest ein Teil des Fluids nach der Fahrzeugreinigung aufbereitbar und wiederverwendbar ist, umfassend zumindest eine Aufbereitungsanlage nach einem der Ansprüche 1 bis 14.
